Europäisches Patentamt

European Patent Office

Office européen des brevets

(19)

(11) Numéro de publication : **0 099 385**
**B1**

# (12) FASCICULE DE BREVET EUROPÉEN

(45) Date de publication du fascicule du brevet :
**16.06.87**

(21) Numéro de dépôt : **83900425.6**

(22) Date de dépôt : **26.01.83**

(86) Numéro de dépôt international :
**PCT/FR 83/00020**

(87) Numéro de publication internationale :
**WO/8302662 (04.08.83 Gazette 83/18)**

(51) Int. Cl.⁴ : **G 01 C   9/06**, G 01 B   3/56

(54) **APPAREIL DE MESURE DE LA PENTE OU DE L'INCLINAISON D'UNE SURFACE OU D'UNE LIGNE.**

(30) Priorité : **27.01.82 FR 8201385**
**08.09.82 FR 8215320**

(43) Date de publication de la demande :
**01.02.84 Bulletin 84/05**

(45) Mention de la délivrance du brevet :
**16.06.87 Bulletin 87/25**

(84) Etats contractants désignés :
**AT BE CH DE GB LI NL SE**

(56) Documents cités :
**DE-A- 2 929 878**
**US-A- 1 414 847**
**US-A- 4 182 046**

(73) Titulaire : **A.B.F. INDUSTRIE S.A.**
**15, Cours Saint Louis**
**F-33300 Bordeaux (FR)**

(72) Inventeur : **BOUVET, Lucien**
**4, rue du Cdt Lherminier**
**F-33600 Pessac (FR)**
Inventeur : **PUYO, Philippe**
**17, Crs St. Louis**
**F-33300 Bordeaux (FR)**

(74) Mandataire : **Thébault, Jean-Louis**
**Cabinet Jean-Louis Thébault 50, Cours de Verdun**
**F-33000 Bordeaux (FR)**

## Description

La présente invention a trait à un appareil de mesure et d'affichage instantanés de la valeur de la pente ou de l'inclinaison d'une surface ou ligne quelconque.

Actuellement sur le marché existent deux grandes familles d'appareils ou outils de mesure de pente ou d'inclinaison. L'une concerne les traditionnels niveaux à bulle ou à eau, avec les variantes qui en sont extrapolées, et les dispositifs utilisant un fil à plomb associé à des systèmes plus ou moins sophistiqués de règles, d'équerres, de compas articulés, de rapporteurs. Certains de ces outils, comme les niveaux à bulle, ne sont pas des instruments de mesure mais de simples dispositifs de contrôle que la surface ou ligne que l'on vérifie est où n'est pas à l'horizontale. Quant aux autres types d'appareil de la famille ci-dessus, ils sont d'un maniement compliqué, d'une précision très imparfaite puisque dépendant de l'habileté et du savoir-faire de l'utilisateur et, de surcroît, fragiles.

Dans cette famille peuvent être rangés les dispositifs décrits dans les documents DE-A-2.929.878 et US-A-1.414.847. Le premier de ces documents concerne un capteur de mesure d'inclinaison par défilement, devant une série d'éléments détecteurs solidaires du boîtier, d'une série d'éléments détecteurs correspondants portés par un support annulaire mobile en rotation sous l'action de la pesanteur agissant sur un pendule. Ce dispositif n'est nullement un outil, sa maniabilité est très médiocre et il nécessite l'emploi des deux mains pour son utilisation, l'une pour tenir le boîtier, l'autre pour manipuler le levier de déverrouillage. L'inconvénient majeur de ce dispositif est qu'il nécessite, après chaque mesure, la remise à l'horizontale du boîtier pour reverrouiller le pendule avant de réincliner le boîtier, ce qui n'est absolument pas pratique d'emploi.

Le document US-A-1.414.847 concerne une sorte de palmer simplifié servant à mesurer des épaisseurs. Deux des côtés du support en forme générale de U sont munis de niveaux à bulle. Un tel instrument est du type tout ou rien et ne peut que détecter l'horizontalité ou l'absence d'horizontalité de chacun des deux côtés considérés mais ne peut faire aucune mesure d'inclinaison.

L'autre grande famille regroupe des matériels de haute technicité et complexes, mettant en œuvre par exemple des gyroscopes ou bien des systèmes optiques, des systèmes à laser ou des appareillages radioélectriques. Ces appareils sont bien entendu fort coûteux et d'un emploi délicat nécessitant même parfois, pour leur usage, des connaissances particulières.

Le but de la présente invention est de pallier ces inconvénients en proposant un outil de mesure véritable du degré d'inclinaison ou de pente, d'un maniement extrêmement simple et capable de donner instantanément la valeur de l'angle d'inclinaison ou de pente d'une surface ou d'une ligne.

L'invention a également pour but de proposer un outil capable de s'adapter à divers usages en offrant une gamme de performances et de services très large grâce à sa structure modulaire faisant appel à l'électronique.

A cet effet, l'invention a pour objet un appareil de mesure de l'inclinaison ou de la pente d'une surface ou ligne par rapport à un plan de référence prédéterminé quelconque, comprenant un bâti présentant extérieurement des faces d'appui, un moyen solidaire du bâti, sensible aux variations de positions dans l'espace de l'appareil, et capable de délivrer un signal proportionnel à l'écart angulaire entre l'une desdites faces d'appui et ledit plan de référence, un moyen d'affichage et de visualisation et un organe de commande déclenchant la mesure et son affichage immédiat sur ledit moyen de visualisation, ledit appareil étant caractérisé en ce que le bâti comprend quatre branches définissant un quadrilatère rectangulaire ou trapézoïdal, trois desdites branches portant chacune l'une desdites faces d'appui, dont deux sont parallèles et l'autre perpendiculaire aux deux autres, cependant que la quatrième branche est conformée selon une poignée, en ce que ledit moyen d'affichage ou visualisation est analogique ou digital et est disposé au voisinage de l'extrémité supérieure de ladite poignée et en ce que l'organe de commande, tel qu'une gâchette ou un bouton-poussoir, est incorporé dans la poignée.

La nature du dispositif sensible de mesure de l'inclinaison ou de la pente peut varier en particulier selon l'usage qui sera fait de l'appareil, selon les conditions d'emploi, la précision recherchée ou le prix de vente fixé, comme on le verra plus loin dans la description qui va suivre.

Par ailleurs, la chaîne électronique de traitement des signaux délivrés par ledit dispositif sensible peut être très facilement aménagée pour permettre l'introduction d'un dispositif de commutation des unités de mesure des angles d'inclinaison ou de pente, d'un dispositif de programmation quelconque, d'un dispositif de signalisation lumineuse ou sonore lorsque par exemple l'angle mesuré atteint une valeur prédéterminée.

Un tel appareil, du fait de ses trois faces de référence, permet aussi bien la mesure de la pente d'un plancher ou d'un plafond, que de l'inclinaison d'une paroi, le dispositif électronique de traitement des signaux de mesure permettant en outre la mesure de tels angles aussi bien par rapport à l'horizontale et à la verticale que par rapport à tout plan quelconque pris comme référence suivant les applications envisagées.

D'autres caractéristiques et avantages ressortiront de la description qui va suivre d'un mode de réalisation d'un outil conforme à l'invention, description donnée à titre d'exemple uniquement et en regard du dessin annexé sur lequel :

Figure 1 représente schématiquement la morphologie externe d'un mode de réalisation de l'outil selon l'invention, et

Figure 2 représente le schéma électrique d'un outil selon l'invention.

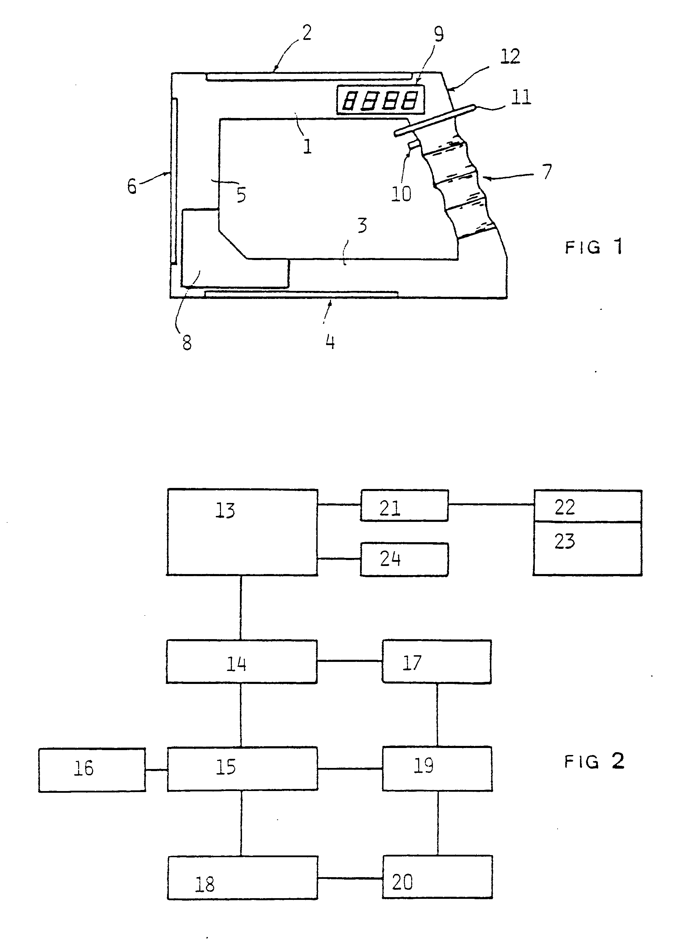

L'outil selon l'invention, tel que représenté sur la figure 1, est constitué d'un cadre de forme quadrangulaire comprenant deux branches parallèles dont l'une (1) définit par sa face externe une surface d'appui supérieure symbolisée en 2, l'autre branche (3) définissant par sa face externe une surface d'appui inférieure symbolisée en 4.

Les deux branches parallèles 1 et 3 sont reliées à une extrémité par une branche 5 dont la face externe 6 définit une surface orthogonale aux deux autres surfaces d'appui 2 et 4.

Enfin, la quatrième branche est constituée en forme de poignée 7 galbée réunissant les deux autres extrémités des branches 1, 3.

L'ensemble du cadre 1-3-5-7 a la forme d'un trapèze mais il pourrait tout aussi bien avoir celle d'un rectangle ou d'un carré.

A l'intérieur par exemple des branches 3 et 5 est monté un dispositif ou capteur 8 de détection et de mesure de l'écart angulaire entre, par exemple le plan de la surface d'appui inférieur 4, et par exemple le plan horizontal.

Le signal de sortie de ce capteur 8 est envoyé par exemple sur un dispositif 9 d'affichage digital fixé sur la branche supérieure 1, au voisinage de la poignée 7.

Cette dernière est munie d'une gâchette ou bouton-poussoir 10 commandant la mesure et son affichage immédiat sur 9.

Une sorte de garde 11 disposée à l'extrémité supérieure de la poignée 7 assure le placement correct de la main et des doigts sur la poignée et sa gâchette.

Le dispositif d'affichage 9 pourrait être également disposé en 12 au-dessus de la poignée 7 à l'extrémité de la branche 1.

La figure 2 illustre le schéma électrique complet des moyens de mesure, d'affichage, de commande et de contrôle susceptibles d'équiper l'outil selon l'invention.

Ces moyens comprennent un capteur ou dispositif 13 de détection des variations de position dans l'espace de l'appareil, d'un type quelconque. La technologie de ce capteur dépend de l'usage envisagé, des conditions d'emploi, de prix. Ce peut être par exemple un dispositif à bulle, à balancier, à fil, à bille, à jauge de contrainte ou tout autre type de détecteur capable de délivrer un signal proportionnel à l'écart angulaire entre, par exemple, les surfaces d'appui 2 et 4 et l'horizontale, ou bien la surface d'appui verticale 6 et la verticale. Ce signal peut être électrique, optique, lumineux, capacitif, résistif, magnétique ou autre. Dans tous les cas, ce signal sera traduit en signal électrique analogique ou digital afin d'être traité ultérieurement en vue notamment de sa mesure et de son affichage.

La mesure de ce signal se fait par un module 14 relié au capteur 13 et à un dispositif d'affichage lumineux digital 15 (ou analogique 16).

Ce dispositif d'affichage digital 15 peut être un dispositif classique comportant une capacité d'affichage suffisante pour exprimer toutes les valeurs que pourra mesurer l'appareil selon la précision, les échelles et les services retenus.

Le dispositif d'affichage analogique 16 peut être par exemple à aiguilles physiques ou dessinées par cristaux liquides.

Le dispositif d'affichage pourra être également symbolique, voire animé, grâce à toutes les possibilités données par les écrans et affichages que pourra procurer la technologie du moment.

On peut adjoindre aux moyens de mesure un module 17 de changement d'échelle ou de commutation des unités de mesure des angles et des pentes.

On peut prévoir un indicateur sonore 18 informant du passage au zéro, éventuellement complété par un module 19 de programmation permettant de déclencher un signal sonore lorsque le capteur 13 délivre un signal dont la mesure correspond à la mesure pré-affichée par le module de programmation.

On peut aussi prévoir un générateur vocal 20 annonçant en clair les valeurs mesurées, dans l'unité choisie, au fur et à mesure de leur variation ou selon la programmation pré-établie.

Les divers circuits électriques ou lumineux sont alimentés par des piles 21, éventuellement équipées d'un dispositif de test d'usure.

Il est possible également d'adjoindre une unité de calcul 22 avec un chronomètre associé 23, permettant l'exploitation immédiate des valeurs mesurées par l'appareil, c'est-à-dire assurant leur conversion, estimant leur variation dans le temps par exemple, ou conservant en mémoire volatile ou non ces valeurs.

Enfin, on a représenté en 24 sur la figure 2 la gâchette ou autre dispositif de commande manuelle par bouton-poussoir, interrupteur ou autre, assurant la mise sous tension des circuits et le déclenchement de la mesure et éventuellement des signaux de contrôle, d'affichage.

Les divers modules et circuits de la figure 2 sont bien entendu incorporés dans ou sur le bâti de l'appareil ainsi que leurs éventuels organes de commande.

L'appareil selon l'invention permet la mesure de tout angle d'inclinaison ou de pente d'un plancher, d'un plafond, d'un mur et, d'une manière générale, de toute surface ou ligne quelconque par rapport à l'horizontale, la verticale ou tout autre plan de référence choisi.

Cet outil est particulièrement simple et rapide d'emploi car la mesure et l'affichage des valeurs d'angle d'inclinaison ou de pente sont quasi instantanés, sans aucun réglage ou manipulation de la part de l'utilisateur, l'appareil pouvant donc être utilisé directement et immédiatement sans connaissances techniques ou apprentissage particuliers.

**Revendications**

1. Appareil de mesure de l'inclinaison ou de la pente d'une surface ou ligne par rapport à un plan de référence prédéterminé quelconque, comprenant un bâti présentant extérieurement des faces d'appui (2, 4, 6), un moyen (13) solidaire du bâti, sensible aux variations de positions dans l'espace de l'appareil, et capable de délivrer un signal proportionnel à l'écart angulaire entre l'une desdites faces d'appui et ledit plan de référence, un moyen d'affichage et de visualisation (9 ; 15, 16) et un organe de commande (10 ; 24) déclenchant la mesure et son affichage immédiat sur ledit moyen de visualisation, ledit appareil étant caractérisé en ce que le bâti comprend quatre branches (1, 3, 5, 7) définissant un quadrilatère rectangulaire ou trapézoïdal, trois desdites branches (1, 3, 5) portant chacune l'une desdites faces d'appui (2, 4, 6) dont deux sont parallèles et l'autre perpendiculaire aux deux autres, cependant que la quatrième branche est conformée selon une poignée (7), en ce que ledit moyen d'affichage ou visualisation (9, 15, 16) est analogique (16) ou digital (15) et est disposé au voisinage de l'extrémité supérieure de ladite poignée (7) et en ce que l'organe de commande (10, 24), tel qu'une gâchette ou un bouton-poussoir, est incorporé dans la poignée (7).

2. Appareil suivant la revendication 1, caractérisé en ce que ledit moyen sensible aux variations de position est un capteur (13) auquel est associé un module de mesure (14) relié au dispositif d'affichage ou visualisation (15, 16).

3. Appareil suivant la revendication 2, caractérisé en ce qu'il comprend en outre un dispositif de commutation d'échelle ou d'unités (17) relié au module de mesure (14).

4. Appareil suivant la revendication 2 ou 3, caractérisé en ce qu'il comprend en outre un module de programmation (19).

5. Appareil suivant l'une des revendications 2 à 4, caractérisé en ce qu'il comprend en outre un circuit indicateur sonore (18) informant que la valeur mesurée correspond à une valeur préaffichée.

6. Appareil suivant l'une des revendications 2 à 5, caractérisé en ce qu'il comprend en outre un générateur vocal (20) traduisant en clair les signaux de mesure.

7. Appareil suivant l'une des revendications 2 à 6, caractérisé en ce qu'il comprend en outre une unité de calcul (22) associée à un chronomètre (23) et reliée audit capteur (13).

## Claims

1. Apparatus for measuring the inclination or gradient of a plane or line with respect to a predetermined reference plane, comprising a generally rectangular frame equipped with outer bearing surfaces (2, 4, 6), a device (13) integral with said frame, sensitive to variations in position in space of said apparatus and which can output a signal proportional to the angular deviation between one of the said bearing surfaces and said reference plane, means for displaying the value of the measurement (9 ; 15, 16), and a control device (10 ; 24) initiating the measurement and its immediate display on said display device, the said apparatus being characterized in that said frame comprises four sides (1, 3, 5, 7) defining a rectangular or a trapezoidal quadrilateral, three of said sides (1, 3, 5) each supporting said outer bearing surfaces (2, 4, 6) of which two are parallel, the third being perpendicular to them, meanwhile the fourth side is forming a handle (7), in that said display device (9, 15, 16) is analogical (16) or digital (15) and disposed close to the upper end of said handle (7), said handle being equipped with an incorporated control device (10, 24) such as a trigger or pushbutton.

2. Apparatus according to claim 1 characterized in that said device for detecting and measuring variations in position is a sensor (13) with which is associated a measurement module (14) connected to a visual display device (15, 16).

3. Apparatus according to claim 2 characterized in that it further comprises a scale or unit switching device (17) connected to the measurement module (14).

4. Apparatus according to claim 2 or 3 characterized in that it further comprises a programming module (19).

5. Apparatus according to anyone of claims 2 to 4 characterized in that it further comprises an audible indicator circuit (18) warning that the measured value corresponds to a pre-entered value.

6. Apparatus according to anyone of claims 2 to 5 characterized in that it further comprises a voice generator (20) converting the measurement signals into voice form.

7. Apparatus according to anyone of claims 2 to 6 characterized in that it further comprises a computing unit (22) associated with a timer (23) and connected to said sensor (13).

## Patentansprüche

1. Gerät zum Messen der Neigung oder des Gefälles einer Fläche oder einer Linie gegenüber einer beliebigen, im voraus festgelegten Bezugsfläche, bestehend aus einem Gestell mit äußeren Auflageflächen (2, 4, 6), einer mit diesem Gestell fest verbundenen Vorrichtung (13), die auf räumliche Positionsschwankungen des Gerätes reagiert und ein Signal abgibt, das sich proportional zur Winkelabweichung zwischen den Auflageflächen und der Bezugsfläche verhält, einer Anzeige- und Ablesevorrichtung (9, 15, 16) und einem Steuerorgan (10 ; 24), das die Messung und die sofortige Anzeige auf der Ablesevorrichtung auslöst, wobei das Gerät dadurch gekennzeichnet ist, daß das Gestell vier, ein Rechteck oder ein Trapez bildende schenkel (1, 3, 5, 7) hat, von denen drei schenkel (1, 3, 5) jeweils mit einer Auflagefläche (2, 4, 6) versehen sind, von denen zwei parallel zueinander und die dritte senkrecht dazu angebracht sind, während der vierte schenkel als Griff (7) ausgebildet ist, an dessen oberen Ende sich die analoge (16) oder digitale (15) Anzeige- und Ablesevorrichtung (9, 15, 16) befindet und in den das Steuerorgan (10, 24) in Form eines Abzuges oder eines Drucktasters eingebaut ist.

2. Gerät nach Anspruch 1, dadurch gekennzeichnet, daß die auf Positionsschwankungen reagierende Vorrichtung ein Meßwertgeber (13) mit einem Meßmodul (14) ist, der an die Anzeige- und Ablesevorrichtung angeschlossen ist (15, 16).

3. Gerät nach Anspruch 2, dadurch gekennzeichnet, daß es außerdem eine Maßstab- oder Maßeinheitenumschaltvorrichtung (17) besitzt, die mit dem Meßmodul (14) verbunden ist.

4. Gerät nach Anspruch 2 oder 3, dadurch gekennzeichnet, daß es außerdem eine Programmiereinheit (19) besitzt.

5. Gerät nach einem der Ansprüche 2 bis 4, dadurch gekennzeichnet, daß es außerdem eine akustische Anzeige (18) besitzt, die anzeigt, daß der gemessene Wert einem vorgegebenen Wert entspricht.

6. Gerät nach einem der Ansprüche 2 bis 5, dadurch gekennzeichnet, daß es einen Stimmerzeuger (20) besitzt, der die Meßsignale in Sprache übersetzt.

7. Gerät nach einem der Ansprüche 2 bis 6, dadurch gekennzeichnet, daß es außerdem einen Rechner (22) zusammen mit einem Zeitmesser (23) enthält, der an den Meßwertgeber (13) angeschlossen ist.

FIG 1

FIG 2

1